# EUROPÄISCHE PATENTSCHRIFT

(11) **EP 1 224 066 B1**
(45) Veröffentlichungstag und Bekanntmachung des Hinweises auf die Patenterteilung: **04.06.2003**
(21) Anmeldenummer: 00972421.2
(22) Anmeldetag: 25.10.2000
(51) Int. Cl.: B26D 1/00

(54) **VERFAHREN UND SAMMELFAHRZEUG ZUR WIEDERVERWERTUNG VON KUNSTSTOFFEN**
METHOD AND COLLECTOR VEHICLE FOR RECYCLING SYNTHETIC MATERIAL
PROCEDE ET VEHICULE COLLECTEUR POUR LE RECYCLAGE DE MATIERES SYNTHETIQUES

(30) Priorität: 27.10.1999 AT 180999
(43) Veröffentlichungstag der Anmeldung: 24.07.2002
(73) Patentinhaber: Krassnitzer, Walter, 9220 Velden (AT); Krassnitzer, Theobald, 9220 Velden (AT)
(72) Erfinder: Krassnitzer, Walter, 9220 Velden (AT); Krassnitzer, Theobald, 9220 Velden (AT)
(74) Vertreter: Pinter, Rudolf, Dipl.-Ing.
(86) Internationale Anmeldenummer: AT0000279
(87) Internationale Veröffentlichungsnummer: WO01030546

(56) Entgegenhaltungen:
- DE-A- 2 516 461
- FR-A- 2 487 480
- US-A- 5 666 891

## Beschreibung

Die Erfindung betrifft ein Verfahren zur Wiederverwertung von schmelzbaren, geschäumten Kunststoffen, insbesonders von expandiertem Polystyrol (EPS), wobei der gesammelte Kunststoff in einem Zerkleinerungsschritt mittels elektrisch beheizter Schneidgitter in kantige Schnipsel zertrennt wird.

Weiters betrifft die Erfindung auch ein Sammelfahrzeug zur Durchführung eines derartigen Verfahrens bzw. insgesamt ein entsprechendes Recycling-System.

Da die beschriebenen Kunststoffe (beispielsweise bekannt unter dem Markennamen STYROPOR) in den letzten Jahren und Jahrzehnten in immer größerer Menge beispielsweise als Verpackungsmaterial verwendet werden, besteht seit längerer Zeit das Bemühen, eine sinnvolle Weiterverarbeitung, beispielsweise von Einweg-Verpackungsmaterial oder auch der im Baugewerbe oder bei der Aufarbeitung alter Kühlschränke und dergleichen anfallenden Abfälle zu ermöglichen. In diesem Zusammenhang sind Verfahren bekannt geworden, bei denen das gesammelte Material in mit pressenartigen Einheiten ausgerüsteten Müllfahrzeugen zur Verringerung des Raumbedarfes zusammengequetscht wird, womit allerdings die wesentliche Grundstruktur dieser geschäumten Kunststoffe weitgehend zerstört und damit die Weiterverwendung nur mehr sehr eingeschränkt möglich wird. Ähnliche Nachteile weisen auch weitere bekannte Verfahren auf, bei denen ganze Verpackungsteile oder auch vorzerkleinerte Stücke des Kunststoffmaterials in Reißwerken oder ähnlichem weiter zerkleinert werden, da dabei die äußere geschlossene Haut des Materials aufgerissen wird und sowohl Feuchtigkeit als auch Mikroorganismen oder dergleichen in die Hohlraumstruktur eindringen können, was ebenfalls nur mehr sehr eingeschränkte Weiterverwendungen ermögiicht.

Beispielsweise aus der DE 25 16 461 A1 ist ein Verfahren der eingangs genannten Art bekannt geworden, bei dem der gesammelte Kunststoff mittels elektrisch beheizter Schneidgitter in kantige Schnipsel zertrennt wird, die durch dieses Schmelzschneiden eine geschlossene äußere Oberfläche aufweisen. Allerdings ist bezüglich der weiteren Verwertung dieser Schnipsel dieser Schrift nur wiederum das allfällige weitere Zerkleinern mit Reißwerken oder dergleichen zu entnehmen, womit wieder die beschriebenen Nachteile dieser Verfahren auftreten.

Aufgabe der vorliegenden Erfindung ist es, ein Verfahren der eingangs genannten Art so zu verbessern, daß eine sinnvolle Wiederverwertung von schmelzbaren, geschäumten Kunststoffen möglich wird, wobei die daraus entstehenden Produkte in Vielfalt und Qualität nicht durch das Wiederverwertungsverfahren selbst beeinträchtigt werden sollen. Weiters sollen auch entsprechend vorteilhaft für ein derartiges Verfahren einsetzbare Sammelfahrzeuge ausgebildet bzw. verbessert werden.

Diese Aufgabe wird gemäß der vorliegenden Erfindung bei einem Verfahren der eingangs genannten Art dadurch gelöst, daß zumindest ein erster Zerkleinerungsschritt in einem transportablen Zerkleinerungsaggregat erfolgt, welches an der jeweiligen Sammelstelle mittels eines über eine Brennkraftmaschine angetriebenen Stromgenerators betrieben wird, wobei die entstehenden Schneidgase der Verbrennungsluft der den Stromgenerator antreibenden Brennkraftmaschine zugeführt und von dieser mitverbrannt werden. Damit kann also nun zumindest die erste Zerkleinerung des wieder zu verwertenden Kunststoffes an lokal entsprechend der jeweiligen Anfallskonzentration eingerichteten Sammelstellen erfolgen, womit ohne die beschriebene mechanische Zerstörung des Rohstoffes eine transportgerechte Volumsverringerung eintritt. EPS-Verpackungen weisen beispielsweise wegen der relativ großen Hohlräume maximal etwa 6 kg und flächige entsprechende Kunststoffabfälle maximal etwa 12 kg Raumgewicht je m³ auf. Nachdem nun mit dem transportablen Zerkleinerungsaggregat am Ort der ersten Sammlung zerkleinert werden kann, kann das Raumgewicht der entstehenden Schnipsel ohne weitere Beeinträchtigung von deren Qualität beispielsweise auf 18 kg je m³ erhöht und damit die Frachtmenge je Sammelfahrt etwa gegenüber den eingangs genannten Verpackungen verdreifacht werden. Die beim Schneiden der Verpackungen entstehenden Dämpfe (bei EPS beispielsweise Styrol und Pentan sowie in Spuren Bromwasserstroff, Toluol, Ethylbenzol, Propylbenzol und dergleichen), die nicht nur intensiv riechen sondern auch die Gesundheit von Bedienungspersonen sowie die Umwelt belasten können, werden unmittelbar der Verbrennungsluft bzw. Ansaugluft der den Stromgenerator des Zerkleinerungsaggregates antreibenden Brennkraftmaschine zugeführt und von dieser mitverbrannt, wobei wegen des hohen Temperaturniveaus im Brennraum von Verbrennungskraftmaschinen eine praktisch restlose Verbrennung dieser Komponenten bzw. Zerlegung in ungiftige, harmlose Anteile erfolgt, die darüber hinaus auch noch nachträglich über die Abgasanlage (Katalysator) der jeweiligen Brennkraftmaschine weiterbehandelt werden können.

Das transportable Zerkleinerungsaggregat ist in besonders bevorzugter Ausgestaltung der Erfindung unmittelbar in das Sammelfahrzeug für den zerkleinerten Kunststoff integriert bzw. wird von diesem transportiert. Es erübrigen sich damit separate Fahrzeugeinheiten für das Sammeln und Zerkleinern, womit die Wiederverwertung insgesamt einfacher und damit auch kostengünstiger und umweltfreundlicher wird.

In weiters bevorzugter Ausgestaltung der Erfindung ist vorgesehen, daß der Stromgenerator für das Zerkleinerungsaggregat von der als Antrieb des Sammelfahrzeuges dienenden Brennkraftmaschine angetrieben wird. Es kann sich dabei beispielsweise um eine zweite Generatoreinheit, ähnlich der Lichtmaschine eines normalen Antriebsmotors eines Fahrzeuges, handeln - unter Umständen kann aber auch der vorhandenen Stromgenerator des Antriebsmotors des Fahrzeuges mitbenutzt werden, wenn entsprechende Kapazität vorhanden ist. Die im Zerkleinerungsaggregat entstehenden Schneigase werden in diesem Fall der Ansaugluft des Antriebsmotors des Sammelfahrzeuges zugeführt.

Nach einer anderen vorteilhaften Ausgestaltung der Erfindung kann aber auch vorgesehen sein, daß der Stromgenerator von einer separaten Brennkraftmaschine angetrieben wird, deren Ansaugluft die Schneidgase des Zerkleinerungsaggregates zugeführt sind, deren Abgase vorzugsweise über die Abgasanlage des Sammelfahrzeuges weiterbehandelt werden und die vorzugsweise mit dem Generator in einem mit dem Sammelfahrzeug transportablem Stormaggregat kombiniert ist. Auf diese Weise ist die Antriebsbrennkraftmaschine des Sammelfahrzeuges entlastet bzw. kann außer Betrieb bleiben, solange die Zerkleinerungstätigkeit beim Sammeln erforderlich ist. Ein Wechsel des Zerkleinerungsaggregates samt Stromaggregat in ein anderes Sammelfahrzeug ist einfach möglich, ohne daß an der Antriebsbrennkraftmaschine des Sammelfahrzeuges manipuliert werden müßte.

In beiden oben angesprochenen Ausgestaltungsvarianten kann vorteilhaft vorgesehen sein, daß zusätzliche Speicherelemente, wie z.B. Pufferakkumulatoren, vorzugsweise im Sammelfahrzeug, zur Zwischenspeicherung von momentan nicht für das Zerkleinerungsaggregat benötigter Energie vorgesehen werden, womit die erforderliche elektrische Leistung des Stromgenerators gepuffert werden kann bzw. nur eine kleinere ständige Antriebsleistung dafür bereitgestellt werden muß.

Die im transportablem Zerkleinerungsaggregat erzeugten Schnipsel werden gemäß einer bevorzugten weiteren Ausgestaltung der Erfindung mittels eines Gebläses abgesaugt und in einen Sammelbereich des Sammelfahrzeuges eingeblasen, was eine einfache und auch schonende Handhabung der erzeugten Schnipsel sicherstellt, wobei durch das Einblasen in den Sammelbereich eine gewisse räumliche Verdichtung der Schnipsel erfolgt und die Ausnutzung der Ladekapazität des Sammelfahrzeuges verbessert wird.

In bevorzugter weiterer Ausgestaltung der Erfindung ist vorgesehen, daß die mittels der Sammelfahrzeuge zerkleinert angelieferten Schnipsel an einer Zentral-Sammelstelle weiterverarbeitet werden, insbesonders z.B. mittels eines stationären Zerkleinerungsaggregates weiter zerkleinert und abgefüllt oder mit Bindemitteln oder dergleichen vermischt zu durchgehende Zwischenräume zwischen den aneinanderliegenden, kantigen Schnipseln aufweisen Platten oder Formkörpern verarbeitet werden. Da das vom Sammelfahrzeug angelieferte Schnittgut infolge des beschriebenen Hitzeschnittes allseitig geschlossene Poren und damit auch eine geschlossene wasserabweisende Außenhaut hat, eignet es sich besonders gut beispielsweise als Wärmeisolierung. Es kann dabei sowohl als Schüttgut lose wie auch ummantelt direkt an der Wand angebracht, als auch etwa als Bodenschüttung verteilt oder zu Platten oder Formteilen verarbeitet, Verwendung finden. Durch die geschlossenen Poren wird eine Kondenswasserbindung, die bei gerissenen oder wie beschrieben mechanisch zerteilten Brocken unvermeidbar ist, verhindert. Die angelieferten Schnipsel sind weiters auch als Zuschlagstoff für Leichtbetone und Baufertigteile bestens geeignet. Da die Temperatur der Schneiddrähte in den elektrisch beheizten Schneidgittem leicht regelbar ist, können die Schnipsel auch wahlweise mit stärkerer oder dünnerer Außenhaut hergestellt werden, was die Stabilität der einzelnen Teile ausschlaggebend bestimmt. Da das Grundmaterial an sich elastisch ist, können die so hergestellten Schnipsel nach vorgewählten Größen und Herstellungsarten für verschiedene Belastungs- und Einsatzbereiche Verwendung finden-so z.B. auch jeden gewünschten Schallbereich absorbieren, indem sie durch elastische Stoßaufnahme die Schallenergie in Wärme umwandeln.

Das erfindungsgemäß ausgebildete Sammelfahrzeug zur Durchführung eines der beschriebenen Verfahren weist ein vorzugsweise eingebautes Zerkleinerungsaggregat mit elektrisch beheizten Schneidgittern auf, dessen im Betrieb entstehende Schneidgase über eine Zuleitung der Ansaugluft der Antriebsbrennkraftmaschine eines Stromgenerators zum Betrieb des Zerkleinerungsaggregates zugeführt sind. Am Ausgang des Zerkleinerungsaggregates ist in bevorzugter Ausgestaltung der Erfindung ein Gebläse angeordnet, welches die erzeugten Schnipsel in einen Sammelbereich des Sammelfahrzeuges einbläst, womit die bereits im Zusammenhang mit dem erfindungsgemäßen Verfahren ausführlich beschriebenen Vorteile erhalten werden.

Als Beispiel wird im folgenden ein Verfahrensablauf zur Wiederverwertung von schmelzbarem, geschäumtem Kunststoff gemäß der vorliegenden Erfindung etwas detaillierter beschrieben.

Zum Sammeln an der Anfallstelle genügt ein überdachter Platz, auf dem z.B. mindesten 4 m³ Raum für die Lagerung von EPS-Verpackungsmaterial vorhanden sein muß. Das gesammelte Material kann ohne weiteres verschmutzt sein. Wesentlich ist, daß das Sammelgut nicht naß gelagert wird, da dies die Schneidezeit unnötig verlängert, und daß die Sammelstelle von einem Fahrzeug mit Anhänger leicht erreicht werden kann. Sammelstellen sind an vielen Orten einzurichten, die leicht zu erreichen sind und von allen genutzt werden können.

Wenn die gesammelte Menge z.B. 4 bis 8 Raummeter erreicht, soll die Verständigung zur Abholung erfolgen. Üblicherweise erfolgt die Entleerung in vorbestimmten Intervallen. Das gesammelte Material wird gewogen, bedarfsweise z.B. händisch kontrolliert, von Fremdkörpern, Metallteilen oder ähnlichen nicht geeigneten Verunreinigungen befreit, in der im Sammelfahrzeug eingebauten Maschine zerschnitten und in den mitgeführten Spezialanhänger geblasen. Die hergestellten Schnipsel (bevorzugte Größe z.B. ungefähr 30 mm) benötigen nunmehr weniger Raum und können, da ein Raummeter ca. 18 kg wiegt, leicht mit dem Anhänger abtransportiert werden.

Bei einem Anhängervolumen von 20 m³ werden etwa 60 Raummeter gesammelte Menge entsorgt. Der Einsatz eines Leicht-LKW, der alle Umweltauflagen erfüllt, mit Einachsanhänger, ist gegenüber einem allgemein üblichen schweren Müllentsorgungsfahrzeug in jedem Fall vorzuziehen. Im Stadtbereich und an Orten mit starker Tages-Verkehrsbelastung kann damit die Sammeltätigkeit auch nachts durchgeführt werden.

Um Fahrtstrecken beim Sammeln kurz zu halten, sind Sammelkreise mit z.B. 30 km bis höchsten 60 km Radien vorgesehen. Das anfallende Sammelgut wird von einem oder mehreren Sammelfahrzeugen zu einer zentral gelegenen Stelle gebracht. Die voraussichtlich anfallende Menge, die einzurichtenden Zentralstellen und die einzusetzenden Sammeleinheiten werden z.B. statistisch ermittelt. Ergibt sich eine zu geringe Sammelmenge, so wird nur eine mobile Zentralstelle (M-Zentralstelle) aufgestellt, ist die Menge größer, wird eine ortsfeste Zentralstelle (O-Zentralstelle) errichtet. Der Zweck eines engen Netzes im Sammelsystem ist, die Transportstrecken von den Anfallstellen zur Zentralstelle und von dort zum Anwender kurz zu halten und dadurch dem Sinn des Recycling, Wiederverwertung mit geringstem Energieaufwand, zu entsprechen.

Als Anlaufstelle für die Sammeleinheiten ist z.B. ein Großraum-Leichtanhänger mit 60 m³ Fassungsraum vorgesehen, in welchen das Sammelgut entleert wird. Bei Bedarf wird dieser mit einem Betriebsfahrzeug zur zugeordneten ortsfesten Zentralstelle gebracht.

Als Hauptlagerplatz und Betriebsstätte zur weiteren Verarbeitung der Schnipsel ist ein verkehrstechnisch günstig gelegener Standort, z.B. im Zentrum des Sammelkreises, vorgesehen. Kurze Anfahrtsstrecken zur Autobahn oder zu Fernverkehrsstraßen sind günstig. Auch eine stillgelegte Tankstelle ist z.B. hervorragend geeignet. Zur Aufbewahrung der Sammelschnipsel wird ein Lagerraum eingerichtet. Eine weitere Bearbeitungsmaschine für die Schnipsel sowie eine Sortiervorrichtung mit Absackanlage für die einzelnen Fraktionen ist vorgesehen.

Betreut wird diese Zentralstelle von einem Leiter, der für Fahrtrouteneinteilung, Sammelstellenbetreuung, Sammelgut-Abrechnung, Entgegennahme der Abholmeldungen, Verrechnung von Sack und Schüttgut und der Verbindung mit der Leitstelle zuständig ist. Weiters obliegt einem Zentralstellenwart die weitere Bearbeitung der Schnipsel, nachschneiden in die gewünschte Komgröße, die Sortierung, die Absackung und die Schüttgutabgabe. Je nach Marktlage kann an dieser Zentralstelle eine Produktionsstätte für Fertigprodukte geschaffen oder angegliedert werden. Eine Lagermöglichkeit für die Fertigprodukte und für die erforderlichen Zuschlagstoffe wie Sand, Zement, Gips u.s.w. muß vorhanden sein.

Hergestellt werden z.B. Grundbaustoffe und Halbfabrikate, die für "Do-it-Yourself" und für professionelle Verarbeitung geeignet sind. Fertigteilhersteller und Betonlieferwerke können die Schnipsel als Isolierschichte und zur Gewichtsverringerung verwenden. Die für den speziellen Zweck vorbereiteten Schnipsel sind z.B. in Säcke abgefüllt. In der Verarbeitung werden die Schnipsel aufgestreut oder eingefüllt, die letzte Schichte kann in einer Mischmaschine mit Sand, Zement und Bindemittel verrührt aufgetragen werden. Eine Endschichte ist leicht zu fertigen. Das gebundene Isoliermaterial eignet sich sehr gut zur Aufbringung von Putz oder Estrich. Weiters können die Schnipsel in einer Mischmaschine mit Sand, Zement und Bindemittel ummantelt und hinter eine, vor einer zu isolierenden Wand aufgestellte, Schalung gefüllt werden. Dazu werden, auf die Größe der Schalplatten ausgerichtete, Dübel in die Wand gesetzt. Lange Schrauben, die der Isolierstärke entsprechen, halten mit großen Unterlagscheiben die Schalung fest. Die Schrauben sind vor dem Hinterfüllen lotrecht und nach der Schnur auszurichten. Nach Abbinden des Füllgutes können durch Lösen der Schrauben die Schalplatten abgebaut werden. Anschließend wird die Außenfläche mit einer speziellen Putzschichte geglättet. Die Deckputzschichte soll erst nach ausreißen des Grundputzes aufgezogen werden.

Bei dieser umweltfreundlichen Entsorgungsart und einer so sinnvollen Wiederverwertung, die durch hervorragende Wärmedämmung enorme Energieeinsparung bringt, wird unsere Umwelt zusätzlich entlastet.

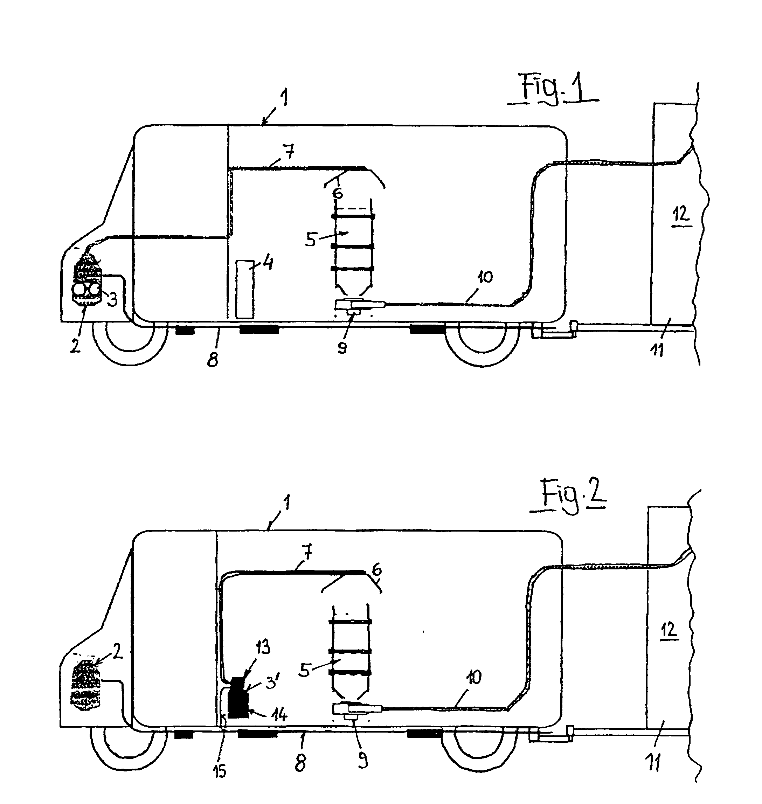

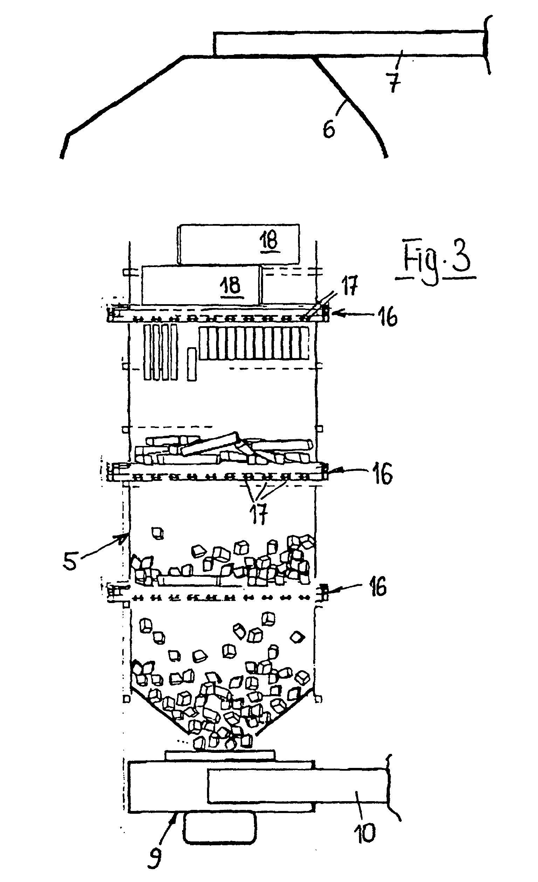

Weiters wird die Erfindung im folgenden auch noch anhand der teilweise schematischen Zeichnungen näher erläutert. Fig. 1 und 2 zeigen dabei schematische Schnitte durch Details von unterschiedlich ausgeführten Sammelfahrzeugen gemäß der Erfindung und Fig. 3 zeigt ein transportables Zerkleinerungsaggregat wie es in den Fahrzeugen gemäß Fig. 1 und 2 eingebaut ist.

Bei der Ausführung nach Fig. 1 liefert die als Antrieb des Sammelfahrzeuges 1 dienende Brennkraftmaschine 2 gleichzeitig auch Antriebsenergie für einen oder mehrere zusätzliche Stromgeneratoren (Lichtmaschinen) 3, welche auf hier nicht dargestellte Weise mit einem Pufferakkumulator 4 verbunden sind, der seinerseits Betriebsenergie für das Zerkleinerungsaggregat 5 liefert. Die entstehenden Schneidgase werden vom Zerkleinerungsaggregat 5 über eine Abzugshaube 6 abgesaugt und über eine Leitung 7 der Ansaugluft der Brennkraftmaschine 2 zugeführt und dort mitverbrannt. Die Abgase der Brennkraftmaschine 2 werden wie üblich über das Auspuffsystem 8 samt Schalldämpfern, Katalysatoren und dergleichen nachbehandelt ins Freie geblasen.

Die auf untenstehend zu Fig. 3 noch besprochene Weise erzeugten Schnipsel werden an der Unterseite des Zerkleinerungsaggregates 5 mittels eines Gebläses 9 abgesaugt und über eine Leitung 10 in einen hier in einem separaten Großraumanhänger 11 untergebrachten Sammelbereich 12 eingeblasen.

Die Ausführung nach Fig. 2 unterscheidet sich von der nach Fig. 1 im wesentlichen nur dadurch, daß hier für die Lieferung des Schneidstromes ein separates Stromaggregat 13 im Sammelfahrzeug 1 vorgesehen ist, welches eine eigene Brennkraftmaschine 14 für den Stromgenerator 3' aufweist. Die über die Abzugshaube 6 abgesaugten Schneidgase werden hier über die Leitung 7 der Ansaugluft der Brennkraftmaschine 14 des Stromaggregats 13 zugeführt und dort mitverbrannt - die Abgase der Brennkraftmaschine 14 des Stromaggregats 13 gelangen über eine Leitung 15 auch hier wiederum in die Abgasanlage bzw. den Auspuff 8 der Brennkraftmaschine 2 des Fahrzeugantriebes.

Das transportable Zerkleinerungsaggregat 5 weist gemäß Fig. 3 hier drei übereinander angeordnete Schneidgitter 16 auf, deren elektrisch beheizte Schneiddrähte zumeist parallel nebeneinander oder auch mit geringem Abstand kreuzweise versetzt angeordnet sein können und auf hier nicht dargestellte Weise mit elektrischer Energie von den Stromgeneratoren 3, 3' gemäß Fig. 1 und 2 versorgt werden. Obenauf werden die zu schneidenden Kunststoffteile 18 aufgelegt und sinken bei entsprechend beheizten Schneidgittern durch diese durch, wobei Scheiben, länglich geformte Quader und schließlich würfelartige Schnipsel entstehen, die unten über das Gebläse 9 abgesaugt und über die Leitung 10 in den hier nicht mehr ersichtlichen Sammelbereich geblasen werden.

An der Oberseite ist die Abzugshaube 6 mit der Leitung 7 zur Verbrennung der entstehenden Schneidgase zu ersehen.

## Patentansprüche

1. Verfahren zur Wiederverwertung von schmelzbaren, geschäumten Kunststoffen, insbesonders von expandiertem Polystyrol (EPS), wobei der gesammelte Kunststoff in einem Zerkleinerungsschritt mittels elektrisch beheizter Schneidgitter (16) in kantige Schnipsel zertrennt wird, **dadurch gekennzeichnet, daß** zumindest ein erster Zerkleinerungsschritt in einem transportablen Zerkleinerungsaggregat (5) erfolgt, welches an der jeweiligen Sammelstelle mittels eines über eine Brennkraftmaschine (2, 14) angetriebenen Stromgenerators (3, 3') betrieben wird, wobei die entstehenden Schneidgase der Verbrennungsluft der den Stromgenerator (3, 3') antreibenden Brennkraftmaschine (2, 14) zugeführt und von dieser mitverbrannt werden.

2. Verfahren nach Anspruch 1, **dadurch gekennzeichnet, daß** das transportable Zerkleinerungsaggregat (15) in das Sammelfahrzeug (1) für den zerkleinerten Kunststoff integriert bzw. von diesem transportiert wird.

3. Verfahren nach Anspruch 2, **dadurch gekennzeichnet, daß** der Stromgenerator (3) für das Zerkleinerungsaggregat (5) von der als Antrieb des Sammelfahrzeuges (1) dienenden Brennkraftmaschine (2) angetrieben wird.

4. Verfahren nach Anspruch 2, **dadurch gekennzeichnet, daß** der Stromgenerator (3') von einer separaten Brennkraftmaschine (14) angetrieben wird, deren Ansaugluft die Schneidgase des Zerkleinerungsaggregates (5) zugeführt sind, deren Abgase vorzugsweise über die Abgasanlage (8) des Sammelfahrzeuges (1) weiterbehandelt werden und die vorzugsweise mit dem Generator (3') in einem mit dem Sammelfahrzeug (1) transportablem Stromaggregat (13) kombiniert ist.

5. Verfahren nach einem oder mehreren der Ansprüche 2 bis 4, **dadurch gekennzeichnet, daß** Speicherelemente, wie z.B. Pufferakkumulatoren (4), vorzugsweise im Sammelfahrzeug (1), zur Zwischenspeicherung von momentan nicht für das Zerkleinerungsaggregat (5) benötigter Energie vorgesehen werden.

6. Verfahren nach einem oder mehreren der Ansprüche 1 bis 5, **dadurch gekennzeichnet, daß** die im transportablen Zerkleinerungsaggregat (5) erzeugten Schnipsel mittels eines Gebläses (9) abgesaugt und in einen Sammelbereich (12) des Sammelfahrzeuges (1) eingeblasen werden.

7. Verfahren nach einem oder mehreren der Ansprüche 1 bis 6, **dadurch gekennzeichnet, daß** die mittels der Sammelfahrzeuge (1) zerkleinert angelieferten Schnipsel an einer Zentral-Sammelstelle weiterverarbeitet werden, insbesonders z.B. mittels eines stationären Zerkleinerungsaggregates weiter zerkleinert und abgefüllt, oder mit Bindemitteln oder dergleichen vermischt zu durchgehende Zwischenräume zwischen den aneinander liegenden, kantigen Schnipseln aufweisenden Platten oder Formkörpem verarbeitet werden.

8. Sammelfahrzeug zur Durchführung des Verfahrens nach einem oder mehreren der Ansprüche 1 bis 7, **dadurch gekennzeichnet, daß** es ein vorzugsweise eingebautes Zerkleinerungsaggregat (5) mit elektrisch beheizten Schneidgittem (16) aufweist, dessen im Betrieb entstehende Schneidgase über eine Zuleitung (7) der Ansaugluft der Antriebsbrennkraftmaschine (2, 14) eines Stromgenerators (3, 3') zum Betrieb des Zerkleinerungsaggregates (5) zugeführt sind.

9. Sammelfahrzeug nach Anspruch 8, **dadurch gekennzeichnet, daß** am Ausgang des Zerkleinerungsaggregates (5) ein Gebläse (9) angeordnet ist, welches die erzeugten Schnipsel in einen Sammelbereich (12) des Sammelfahrzeuges (1) einbläst.

## Claims

1. Method for recycling fusible, foamed synthetic materials, in particular, expanded polystyrene (EPS), wherein, during a size-reduction stage, the collected synthetic material is divided into angular chips by means of electrically heated cutting meshes (16), **characterised in that** at least a first size-reduction stage takes place in a transportable size-reduction unit (5), which is operated at the relevant collection site by means of a power generator (3,3') driven via a combustion engine (2, 14), wherein the cutting gases are fed into the combustion air for the combustion engine (2, 14) driving the power generator (3,3'), by which combustion engine the cutting gases are co-combusted.

2. Method according to claim 1, **characterised in that** the transportable size-reduction unit (15) is integrated within and/or is transported by the collection vehicle (1) for the synthetic material which has been reduced in size.

3. Method according to claim 2, **characterised in that** the power generator (3) for the size-reduction unit (5) is driven by the combustion engine (2) which serves to drive the collection vehicle (1).

4. Method according to claim 2, **characterised in that** the power generator (3') is driven by a separate combustion engine (14), into the intake air of which the cutting gases from the size-reduction unit (5) are fed; from which the exhaust gases are further processed, preferably via the exhaust system (8) of the collection vehicle (1); and which is preferably combined with the generator (3') in a power unit (13) transportable with the collection vehicle (1).

5. Method according to one or more of claims 2 to 4, **characterised in that** storage elements, such as a buffer batteries (4), are provided, preferably in the collection vehicle (1), for intermediate storage of energy not required at any given moment for the size-reduction unit (5).

6. Method according to one or more of claims 1 to 5, **characterised in that** the chips produced in the transportable size-reduction unit (5) are drawn off by means of a fan (9) and blown into a collecting region (12) of the collection vehicle (1).

7. Method according to one or more of claims 1 to 6, **characterised in that** the . chips, supplied in a reduced size by means of the collection vehicle (1), are further processed at a central collection site, in particular, for example, that the chips are further reduced in size and packaged by means of a stationary size-reduction unit, or that, after mixing with binding agents or similar, the chips are processed to form panels or formed bodies with continuous intermediate spaces between the mutually adjacent, angular chips.

8. Collection vehicle for implementation of the method according to one or more of claims 1 to 7, **characterised in that** it provides a preferably integrated size-reduction unit (5) with electrically heated cutting meshes (16), from which the cutting gases arising during its operation are supplied via a supply line (7) to the intake air of the combustion-engine drive unit (2, 14) for a power generator (3, 3') for the operation of the size-reduction unit (5).

9. Collection vehicle according to claim 8, **characterised in that** a fan (9) is arranged at the output of the size-reduction unit, which blows the chips produced into a collecting region (12) of the collection vehicle (1).

## Revendications

1. Procédé de recyclage de matières synthétiques alvéolaires, susceptibles de fondre, en particulier de polystyrène expansé (EPS), dans lequel la matière synthétique collectée est soumise, dans une étape de broyage, à un déchiquetage en tout petits morceaux, à l'aide dune grille de découpage (16) chauffée électriquement, **caractérisé en ce qu'**au moins une étape de déchiquetage est effectuée dans un groupe de déchiquetage (5) transportable, fonctionnant, sur le site de collecte respectif, à l'aide d'un générateur électrique (3, 3') entraîné par l'intermédiaire d'un moteur à combustion interne (2, 14), les gaz de découpage produits étant ajoutés à l'air de combustion du moteur à combustion interne (2, 14) entraînant un générateur électrique (3, 3') et étant brûlés conjointement avec celui-ci.

2. Procédé selon la revendication 1, **caractérisé en ce que** le groupe de déchiquetage (15) transportable est intégré dans le véhicule collecteur (1) prévu pour la matière synthétique déchiquetée, ou bien est transporté par celui-ci.

3. Procédé selon la revendication 2, **caractérisé en ce que** le générateur électrique (3) prévu pour le groupe de déchiquetage (5) est entraîné par le moteur à combustion interne (2) servant à l'entraînement du véhicule collecteur (1).

4. Procédé selon la revendication 2, **caractérisé en ce que** le générateur électrique (3') est entraîné par un moteur à combustion interne (14) séparé, à l'air d'aspiration duquel sont ajoutés les gaz de découpage du groupe de déchiquetage (5), dont les gaz d'échappement de préférence sont retraités par l'intermédiaire du système de gaz d'échappement (8) du véhicule collecteur (1) et ce système de gaz d'échappement étant de préférence combiné au générateur (3') dans un groupe électrique (13), transportable avec le véhicule collecteur (1).

5. Procédé selon l'une ou plusieurs des revendications 2 à 4, **caractérisé en ce que** des éléments accumulateurs, tels que par exemple des accumulateurs tampon (4), sont prévus de préférence dans le véhicule collecteur (1) pour effectuer le stockage intermédiaire d'énergie momentanément non demandée pour le groupe de déchiquetage (5).

6. Procédé selon l'une ou plusieurs des revendications 1 à 5, **caractérisé en ce que** les tout petits morceaux produits dans le groupe de déchiquetage (5) transportable sont aspirés à l'aide d'une soufflante (9) et insufflés dans une zone de collecte (12) du véhicule collecteur (1).

7. Procédé selon l'une ou plusieurs des revendications 1 à 6, **caractérisé en ce que** les tout petits morceaux, fournis, à l'état déchiqueté, à l'aide des véhicules collecteurs (1) sont retraités dans un poste de collecte central, en particulier sont soumis à un déchiquetage supplémentaire effectué à l'aide d'un groupe de déchiquetage stationnaire et sont conditionnés dans des récipients ou bien sont traités en étant mélangés à des liants ou analogues, pour combler les espaces intermédiaires de discontinuité existant entre les plaques ou les corps moulés présentant les tous petits morceaux à bords vifs, placés les uns contre les autres.

8. Véhicule collecteur pour la mise en oeuvre du procédé selon l'une ou plusieurs des revendications 1 à 7, **caractérisé en ce qu'**il présente un groupe de déchiquetage (5), de préférence intégré, avec des grilles de découpage (16) chauffées électriquement, dont les gaz de découpage, produits pendant le fonctionnement, sont ajoutés, par l'intermédiaire d'une conduite d'alimentation (7), au flux d'air d'admission du moteur à combustion interne d'entraînement (2, 14) d'un générateur électrique (3, 3'), pour assurer le fonctionnement d'un groupe de déchiquetage (5).

9. Véhicule collecteur selon la revendication 8, **caractérisé en ce qu'**à la sortie du groupe de déchiquetage (5) est disposée une soufflante (9) qui insuffle les tous petits morceaux produits dans une zone de collecte (12) du véhicule collecteur (1).
